# EUROPEAN PATENT SPECIFICATION

(11) **EP 1 048 126 B1**
(45) Date of publication and mention of the grant of the patent: **02.08.2006**
(21) Application number: 98960933.4
(22) Date of filing: 24.12.1998
(51) Int. Cl.: H04B 1/59, H04L 27/20, G06K 7/00, H04L 25/49, H04L 27/18, H04L 27/227, G01S 13/02

(54) **A TRANSMITTER AND A METHOD FOR TRANSMITTING DATA**
SENDER UND VERFAHREN ZUM SENDEN VON DATEN
EMETTEUR ET PROCEDE D'EMISSION DE DONNEES

(30) Priority: 24.12.1997 AU PP111297
(43) Date of publication of application: 02.11.2000
(73) Proprietor: MAGELLAN TECHNOLOGY PTY. LIMITED, Annandale, NSW 2038 (AU)
(72) Inventor: MURDOCH, Graham, Alexander, Munro, Annandale, NSW 2038 (AU); LITTLECHILD, Stuart, Colin, Stanmore, NSW 2048 (AU)
(74) Representative: McLeish, Nicholas Alistair Maxwell
(86) International application number: PCT/AU1998/001077
(87) International publication number: WO 1999/034526

(56) References cited:
- EP-A- 0 403 085
- EP-A- 0 851 639
- GB-A- 2 314 999
- US-A- 4 011 562
- US-A- 4 249 214
- US-A- 4 899 158
- US-A- 5 374 930
- US-A- 5 481 262

## Description

### Field of Invention

The invention relates to a transmitter and a method for transmitting data.

The invention has been developed primarily for the field of radio frequency identification (RFID), and more particularly to a method for transmitting data to a transponder with a single antenna, and will be described hereinafter with reference to that application. This invention has particular merit when applied to passive transponders where high speed data transmission is desirable.

### Background of the Invention

Hitherto, high speed data has been transmitted to RFID transponders by modulation of the excitation field. Generally pulse position modulation with 100% depth amplitude modulation of the excitation field is used. The excitation field is turned off for short intervals which are detected by the transponder's processing circuitry. To achieve high data rates while maintaining the transmission of power the intervals must be short and the duty cycle low. Typically a duty cycle of 10% is used and the intervals are 1µs long and the average time between intervals is 10µs. Short intervals such as these have a wide bandwidth. Accordingly, both the interrogator and the transponder require low Q factor, wide bandwidth antennae to transmit and receive the data. Low Q factor antennae are not energy efficient and, as such, the interrogator antenna will consume more power than a high Q factor antenna. Moreover, for passive transponders a stronger excitation field is required to compensate for the less efficient antenna.

Additionally, regulations governing the magnitude of electromagnetic emissions place upper limits on the strength of excitation fields that can be used and the allowable bandwidth of an excitation field. The wide bandwidth of the prior art pulse, modulation data results in limitations being placed on the maximum excitation field strength.

EP-A-0403085 discloses a system for transmitting a comb of radar signals including a phase shifter for shifting a phase of an input carrier signal. This prior art is adenowledged in the preamble of the independent claims.

US 4,249,214 discloses an improved arrangement for generating incidental phase-modulation corrected modulated carrier signals.

US 5,374,930 discloses a transponder for communicating with an interrogator having a high Q-factor resonant circuit of frequency fl for receiving RF power signals.

### DISCLOSURE OF THE INVENTION

It is an object of the invention, at least in the preferred embodiment, to overcome or at least substantially ameliorate one or more of the disadvantages of the prior art.

According to one aspect of the invention there is provided a method according to claim 1.

According to a second aspect of the invention there is provided a device according to claim.

Preferably, the modulated signal is received by a second antenna which in response thereto, produces a first signal which is provided to receiver means, the receiver means deriving a second signal indicative of the data signal. Even more preferably, the first signal is used to power the receiver means.

In a preferred form, the modulated signal includes the sum of the carrier signal and an attenuated quadrature carrier signal which is modulated with the data signal. This form of modulation is described herein as phase jitter modulation (PJM).

In a preferred form the antenna is a tunable coil. Preferably also, both the first and second antennas have a high Q factor.

According to another aspect of the invention there is provided an identification system including a device as described above.

Preferably, the system is for identifying luggage.

### Brief Description of the Drawings

The prior art and a preferred embodiment of the invention will now be described, by way of example only, with reference to the accompanying drawings in which:
Figure 1 is a schematic illustration of a prior art transponder circuit;
Figure 2 illustrates representative waveforms associated with the prior art circuit of Figure 1;
Figures 3(a) to 3(c) are frequency spectra associated with the waveforms of the prior art circuit of Figure 1;
Figures 4(a) and 4(b) are phasor diagrams for waveforms produced in accordance with the invention;
Figures 5(a) to 5(c) are frequency spectra associated with the invention;
Figures 6(a) and 6(b) respectively illustrate methods of encoding and decoding data in accordance with the invention;
Figure 7 is a schematic illustration of a preferred circuit for encoding the data signal for transmission; and
Figure 8 is a schematic illustration of a preferred circuit for decoding the data signal in the transponder.

### Detailed Description of a Preferred Embodiment of the Invention

Passive RFID transponders that incorporate a single antenna are interrogated by an interrogator using an excitation field. This field is received by the transponder's antenna and the voltage induced on the antenna is rectified and used to power the transponder. Often it is necessary for the transponder to receive data transmitted from its interrogator. For single antenna transponders the received messages must be received by the same antenna that is used to receive the excitation signal used to power the transponder. In prior art systems the excitation signal is amplitude modulated to convey messages from the interrogator to the transponder.

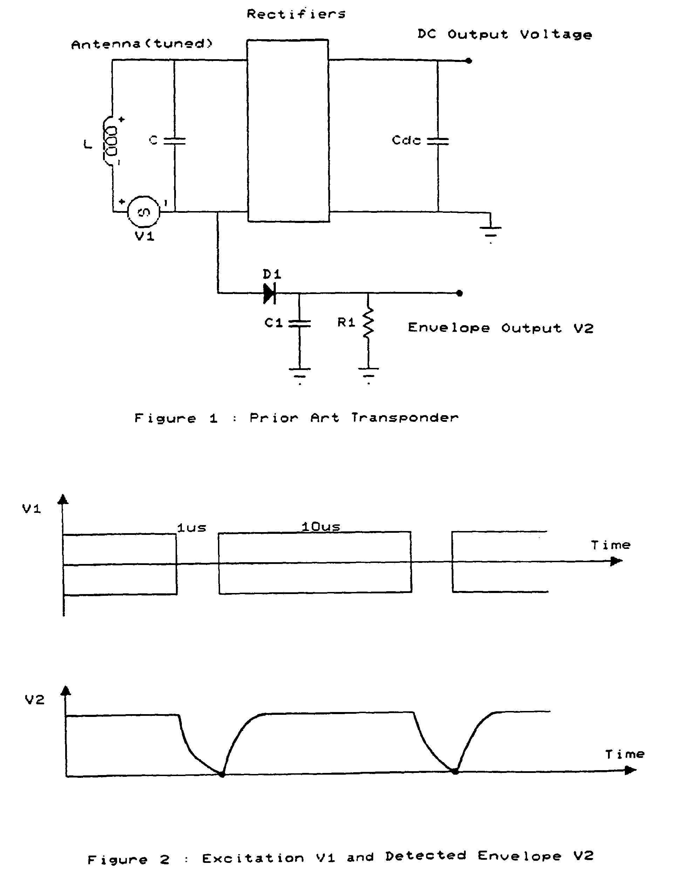

Figure 1 shows a prior art transponder where the antenna L is tuned by a capacitor C and data is transmitted to the transponder by amplitude modulation. The voltage V 1 induced in the transponder's antenna coil is magnified by the antenna's tuning, rectified by the rectifiers and stored on the DC storage capacitor Cdc for use by the transponder's electronic circuits. The antenna voltage is peak level detected by the diode envelope detector D1, C1 and R1 to give the envelope voltage V2.

Figures 2(a) and 2(b) illustrate waveforms associated with the prior art circuit of Figure 1. More particularly, Figure 2(a) shows the excitation voltage V1 with amplitude intervals to giving pulse position modulation. To deliver the maximum power to the transponder, a low duty cycle is used, typically 10:1. Figure 2(b) shows the envelope of the voltage V2 induced in the antenna. The antenna's transient response results in a finite rise and fall time for V2. The transient time of the antenna must be sufficiently short to allow narrow pulses to pass without significant distortion. The antenna's transient response time constant Ts and bandwidth BW are related by Ts=1/(BW.π). Accordingly, to pass short pulses the bandwidth of the antenna must be broad. For example, to pass 1µs pulses a bandwidth of at least 1 MHz is required.

Figures 3(a) to 3(c) are frequency spectra associated with the prior art circuit of Figure 1. Figure 3 (a) shows a typical data spectrum. For data at 100 kbps the first zero of the frequency spectrum occurs at 100 kHz. Figure 3(b) shows the data spectrum when encoded as pulse position modulation PPM where narrow low duty cycle pulses are used. The spectrum for this type of encoding is much broader than the original data spectrum. For 1µs pulses with a 10:1 duty cycle the first amplitude zero of the frequency spectrum occurs at 1 MHz. Figure 3(c) shows the spectrum of the excitation signal when modulated with the PPM signal whose spectrum is shown at Figure 3(b). The modulated spectrum is double sided and accordingly, for 1µs pulses with a 10:1 duty cycle the width of the main spectral lobe is 2 MHz. Clearly the bandwidth of the PPM modulated excitation signal is much broader than the original data spectrum.

To pass the inherently broad band PPM excitation signal both the interrogator and transponder antenna must have a wide bandwidth. Consequently the interrogator and transponder antennae must have a low Q and will operate with a low efficiency. In the interrogator the generation of 100% amplitude modulated PPM requires that excitation signal be completely quenched for each pulse. This requires a wide band low efficiency antenna. Narrow band antennae would operate with high efficiency but are unable to respond to the narrow amplitude pulses of PPM. Similarly the transponder antenna bandwidth must be broad band enough to pass the modulated excitation signal. Broad band antennae are inherently low Q and are poor collectors of energy from an excitation field.

In this preferred embodiment of the invention data is imposed as a low level signal having a modulated quadrature component. Most preferably this modulation is phase modulation although in other embodiments use is made of amplitude modulation. In the present embodiment the low level signal appears as a tiny phase jitter in the excitation field. There is no change in the amplitude of the excitation field and hence the transmission of power to the transponder is unaffected. This form of modulation will be termed phase jitter modulation or, for convenience, PJM.

There are many methods of producing small modulated phase shifts. For example, by passing the signal through a phase shifter such as an RC or tuned circuit, or through a variable length delay line.

In this embodiment, to produce the signal at the interrogator, a small portion of the excitation signal is phase shifted 90 degrees to give a quadrature signal. This is then PRK modulated with the data signal and added back onto the original excitation signal before being transmitted to the transponder. The resultant signal can be amplitude limited to remove any residual amplitude component. At the transponder these tiny phase shifts in the excitation induce corresponding antenna voltage phase shifts that are unaltered by any circuit impedances or power regulation circuitry connected to the transponder's antenna.

Figure 4(a) is a phasor diagram of the excitation signal Fc and the modulated quadrature signal PRK. The amplitude of the respective signals are given by their phasor lengths. The phase deviation THETA caused by the modulated quadrature signal is, for low level signals, extremely small and is given by:
THETA = arctan (2xMag(PRK)/Mag(Fc))

For a 40 dB attenuated PRK signal THETA = 1.2 degrees and for a 60 dB attenuated PRK signal THETA = 0.12 degrees. Both of these are extremely small phase deviations of the excitation signal.

Phase quadrature modulation is recovered using a local oscillator (LO) signal, with a fixed phase with respect to the excitation signal, to down convert the modulated data to baseband in a mixer or multiplier. In the transponder the LO signal must be derived from the modulated excitation signal. The preferred method of extracting a LO signal from the modulated excitation signal uses a Phase Locked Loop PLL in the transponder to generate the LO signal. The LO signal is generated by a low loop bandwidth PLL which locks to the original excitation signal's phase but is unable to track the high speed modulated phase shifts. The quadrature data signal is down converted and detected in a mixer or multiplier driven with the LO signal. Depending upon the type of phase detector used in the PLL, and the propagation delays through the circuit, the phase of the LO with respect to the excitation signal can be anywhere between 0° and 360°. If a conventional XOR phase detector is used in the PLL then the output of the PLL oscillator will be at nominally 90 degrees to the excitation signal and will be in phase with the data modulated phase quadrature signal. A 90° phase between the LO and the excitation signal is not necessary for the effective detection of quadrature phase modulation. An XOR mixer has a linear phase to voltage conversion characteristic from 0° to 180° and 180° to 360°. Hence it gives the same output amplitude irrespective of the phase angle except around 0° and 180° where there is a gain sign change.

The average output voltage DC level from a mixer is a function of the average phase difference between its inputs. It is more convenient for circuit operation for the average output to be around midspan and hence an LO with a phase angle of around 90° is more convenient. The phase of the LO signal can be simply adjusted using fixed phase delay elements. Hence a 0° or 180° phase detector can be used and a further 90° (roughly) of phase shift can be achieved with a fixed delay element.

Figure 4(b) is a phasor diagram of the modulated excitation signal and a quadrature local oscillator signal in the transponder used to demodulate the data signal. The local oscillator signals phase is at 90 degrees with respect to the excitation signal's phase.

For phase modulation the data bandwidth is no broader than the original double sided data bandwidth. When attenuated the level of the modulated data spectrum is extremely low with respect to the excitation signal amplitude making conformance to regulatory emission limits significantly easier than with the prior art.

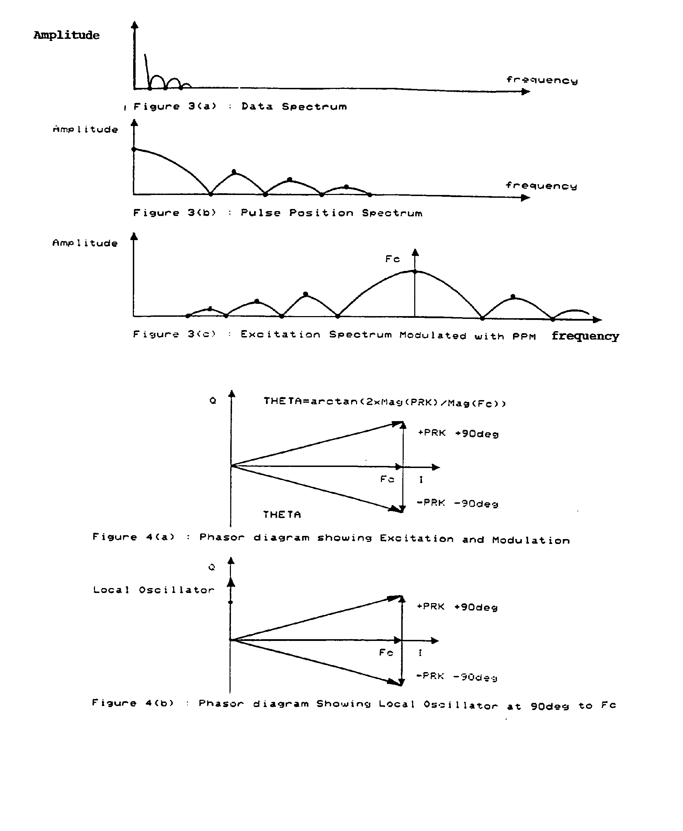

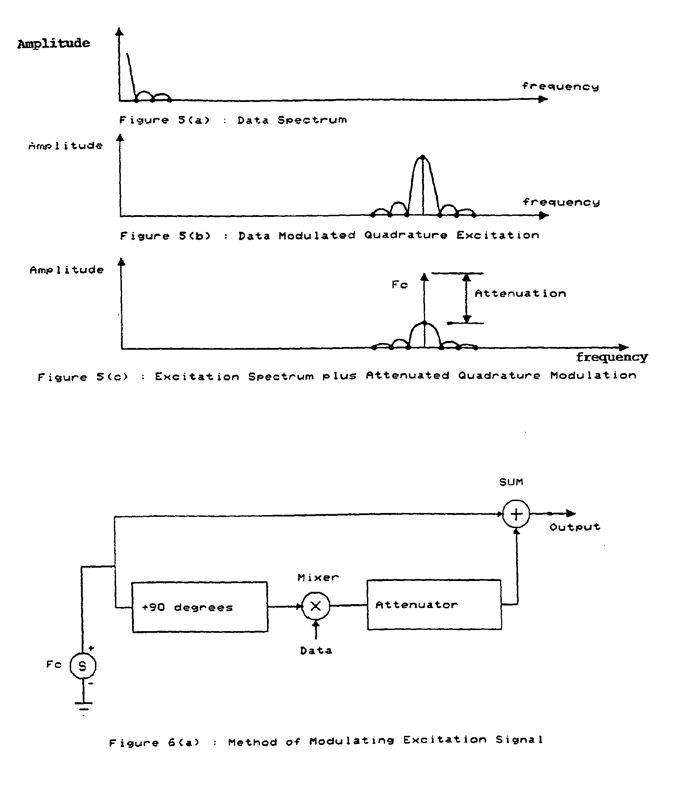

Figures 5(a) to 5(c) are representative frequency spectra that explain the operation of the invention. More particularly, Figure 5(a) is a typical data spectrum. For data at 100 kbps the first zero of the frequency spectrum occurs at 100 kHz. Figure 5(b) is a representative frequency spectrum of the data when modulated onto a quadrature version of the excitation signal. The spectrum for this type of modulation is the same as the double sided spectrum of the original data spectrum. In the invention the modulated quadrature signal is attenuated and added to the original excitation signal. Figure 5(c) shows the spectrum of the excitation signal Fc plus the attenuated modulated quadrature signal whose spectrum is shown in Figure 5(b). The attenuation level is given by the difference between the amplitude of the excitation signal and the amplitude of the data sidebands.

Since the spectrum of the transmitted excitation signal is equal to the original double sided data spectrum, narrow band high Q interrogator and transponder antennae are used to respectively transmit and receive the modulated excitation signal. Consequently, the interrogator's excitation antenna operates with high efficiency and the transponder's antenna likewise receives energy with high efficiency. In other embodiments use is made of low Q antennae.

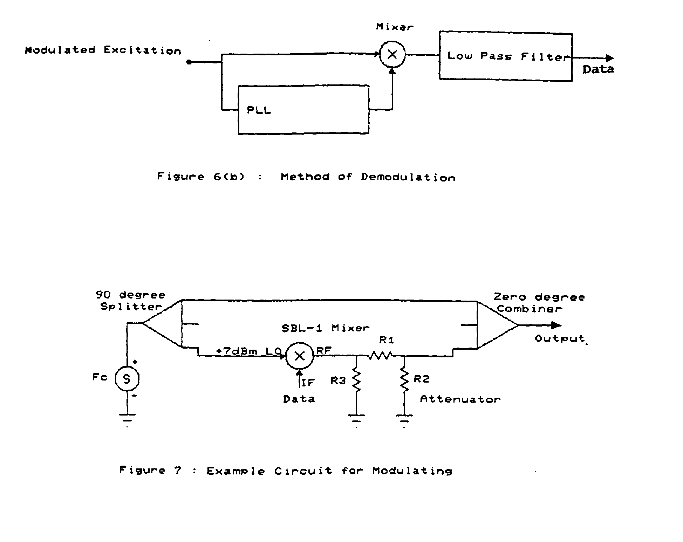

Figures 6(a) and 6(b) show methods of modulating and demodulating according to this invention. Turning first to Figure 6(a), the portion of the main excitation signal is phase shifted 90 degrees to produce a quadrature signal. The quadrature signal is then modulated with data. The preferred form of modulation is phase reverse keying PRK. The PRK modulated quadrature signal is attenuated and then added back to the main excitation signal. Although shown in a particular order the sequence phase shift, modulation and attenuation are done in other orders in alternative embodiments. This method of modulation produces low level data side bands on the excitation signal where the sidebands are in phase quadrature to the excitation signal. The data signal appears as a low amplitude phase jitter on the excitation signal. In some embodiment the signal is further amplitude limited to remove any residual amplitude component.

Figure 6(b) illustrates a method for demodulating the data modulated on to the excitation signal. A LO signal is generated by a low loop bandwidth phase lock loop PLL. The PLL locks on to the excitation signals phase and is unable to follow the high speed phase jitter caused by the data modulation. For the standard PLL phase detector the PLL oscillator will lock at a fixed phase with respect to the excitation signal's phase. This oscillator signal is then used as a LO to demodulate the quadrature sideband data signal in the multiplier. A low pass filter LPF filters out high frequency mixer products and passes the demodulated data signal.

Figure 7 shows an example circuit for encoding the data signal for transmission. An excitation reference source Fc is split through a 90 degree splitter. One output from the splitter is fed to the LO port of a mixer. Data is fed to the mixer's IF port and causes PRK modulation of the LO port's signal. The output of the mixer at the RF port is a PRK modulated quadrature signal. This is attenuated and added back onto the reference by a zero degree combiner ready for transmission to the transponder.

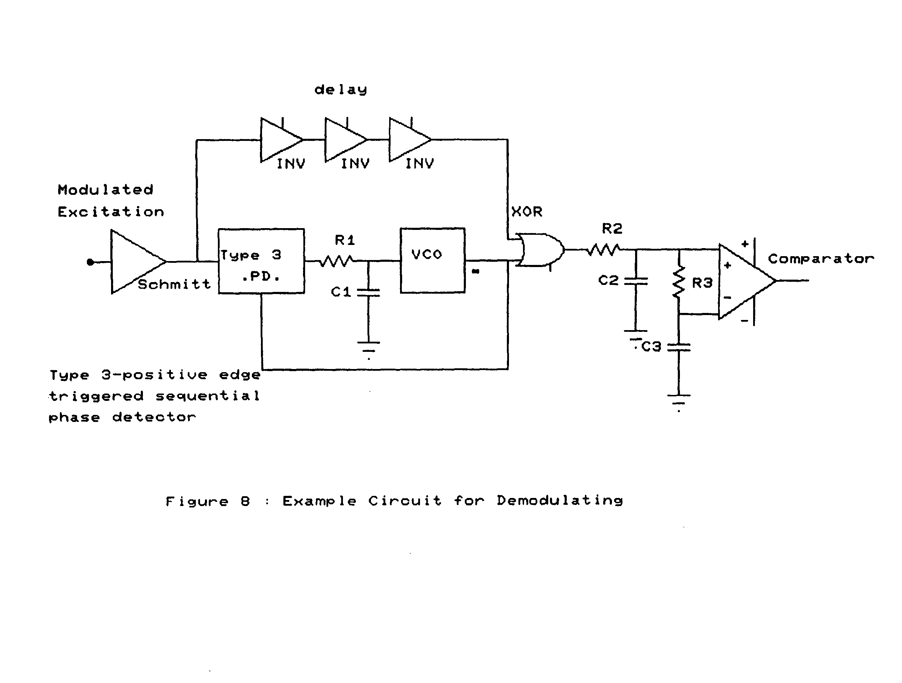

Figure 8 shows an example circuit for decoding the data signal in the transponder. The transponder antenna voltage is squared up by a schmitt trigger, the output of which feeds a type 3 PLL. A type 3 phase detector is a positive edge triggered sequence phase detector which will drive the PLL oscillator to lock at 180° with respect to the input phase. With a low loop bandwidth the PLL is able to easily filter off the sidebands on the input signal The output of the schmitt is passed through a chain of invertors designed to add a fixed delay to the input signal. The delay is approximately chosen so that the phase of the output from the delay chain is not 0° or 180° with respect to the LO. A preferred phase value is 90° for circuit convenience. The output of the VCO acts as the LO to demodulate the Phase Jitter Modulated data. The data is demodulated in an exclusive OR gate, the output of which is low pass filtered and detected with a floating comparator.

Although the invention has been described with reference to a specific example it will be appreciated by those skilled in the art that it may be embodied in many other forms.

## Claims

1. A method of transmitting data for radio frequency identification from a first antenna, the method comprising the steps of:
providing a carrier signal adapted to power a radio frequency identification device;
imposing a phase modulation on the carrier signal in accordance with a data signal to create a modulated signal; and
providing the modulated signal to the first antenna;
**characterized in that** the phase modulation on the carrier signal is caused by a low phase deviation-
so that the modulated signal appears as a phase jitter in an excitation field transmitted by the first antenna.

2. A method as claimed in claim 1, wherein the modulated signal has a quadrature component.

3. A method as claimed in claim 2, wherein the phase deviation is provided by the equation:
**THETA** = arctan (2xMag(PRK)/Mag(Fc)),
where Fc is the carrier signal and PRK is the quadrature component.

4. A method as claimed in claim 2, wherein the quadrature component is derived from a portion of the carrier signal, which is phase shifted 90 degrees to create a first signal.

5. A method as claimed in claim 4, wherein the first signal is PRK modulated with the data signal.

6. A method as claimed in claim 1, wherein a phase shifter controlled by the data signal is used to provide the phase deviation.

7. A method as claimed in claim 6, wherein the phase shifter is a delay line.

8. A method as claimed in claim 6, wherein the phase shifter is a tuned circuit.

9. A method as claimed in claim 6, wherein the phase shifter is a RC circuit.

10. A method as claimed in claim 1, wherein the modulated signal is created such that sidebands of the modulated signal are between -40dB and -60dB below the amplitude of the carrier signal.

11. A method as claimed in claim 1, further comprising the step of receiving the modulated signal with a second antenna which, in response thereto, produces a second signal indicative of the data signal.

12. A method as claimed in claim 11, wherein the first signal is used to power a receiver means.

13. A device adapted to interrogate a radio frequency identification device, comprising:
a first antenna;
oscillator means for providing a carrier signal adapted to power the radio frequency identification device; and
modulation means for imposing phase modulation on the carrier signal in accordance with a data signal to create a modulated signal;
**characterized in that** the modulation means imposes phase modulation on the carrier signal caused by a low phase deviation
so that the modulated signal appears as a phase jitter in an excitation field transmitted by the first antenna.

14. A device as claimed in claim 13, wherein the modulated signal has a quadrature component.

15. A device as claimed in claim 14, wherein the phase deviation is provided by the equation:
THETA = arctan (2xMag(PRK)/Mag(Fc)),
where Fc is the carrier signal and PRK is the quadrature component.

16. A device as claimed in claim 14, wherein the quadrature component is derived from a portion of the carrier signal, which is phase shifted 90 degrees to create a first signal.

17. A device as claimed in claim 13, wherein the modulated signal includes a sum of the carrier signal and an attenuated quadrature carrier signal which is modulated with the data signal.

18. A device as claimed in claim 13, wherein the antenna is a tuneable coil.

19. A device as claimed in claim 13, wherein the modulation means is a phase shifter.

20. A device as claimed in claim 19, wherein the phase shifter is a delay line.

21. A device as claimed in claim 19, wherein the phase shifter is a tuned circuit.

22. A device as claimed in claim 19, wherein the phase shifter is an RC circuit.

23. A device as claimed in claim 13, wherein the modulated signal is created such that sidebands of the modulated signal are between -40dB and -60dB below the amplitude of the carrier signal.

24. A radio frequency identification device (RFID) adapted for interrogation by the device as claimed in any one of claims 13 to 23, the RFID comprising:
a second antenna, and
receiver means, adapted to derive a second signal indicative of a data signal from a first signal provided by the second antenna in response to receiving the modulated signal, which appears as the phase fitter in the excitation field.

25. A RFID device as claimed in claim 24, wherein the first signal is used to power the receiver means.

26. An identification system including a device as claimed in any one of claims 13 to 23.

27. A system as claimed in claim 26 for identifying luggage.

## Patentansprüche

1. Verfahren zum Übertragen von Daten für eine Radiofrequenzidentifizierung von einer ersten Antenne, wobei das Verfahren folgende Schritte umfasst:
Bereitstellen eines Trägersignals, welches dazu ausgebildet ist, eine Radiofrequenzidentifizierungsvorrichtung zu speisen;
Durchführen einer Phasenmodulation an dem Trägersignal nach Maßgabe eines Datensignals, um ein moduliertes Signal zu erzeugen; und
Bereitstellen des modulierten Signals an die erste Antenne;
**dadurch gekennzeichnet, dass** die Phasenmodulation an dem Trägersignal durch eine geringe Phasenabweichung verursacht wird, sodass das modulierte Signal als ein Phasenjitter in einem Anregungsfeld erscheint, welches durch die erste Antenne übertragen wird.

2. Verfahren nach Anspruch 1, wobei das modulierte Signal eine Quadratur-Komponente aufweist.

3. Verfahren nach Anspruch 2, wobei die Phasenabweichung durch die Gleichung bereitgestellt wird:
THETA = arctan (2xMag(PRK)/Mag(Fc)),
wobei Fc das Trägersignal und PRK die Quadratur-Komponente ist.

4. Verfahren nach Anspruch 2, wobei die Quadratur-Komponente von einem Abschnitt des Trägersignals abgeleitet wird, welcher 90 Grad phasenverschoben ist, um ein erstes Signal zu erzeugen.

5. Verfahren nach Anspruch 4, wobei das erste Signal mit dem Datensignal PRK-moduliert wird.

6. Verfahren nach Anspruch 1, wobei eine Phasenverschiebungseinrichtung, welche von dem Datensignal gesteuert/geregelt wird, verwendet wird, um die Phasenabweichung bereitzustellen.

7. Verfahren nach Anspruch 6, wobei die Phasenverschiebungseinrichtung eine Verzögerungsleitung ist.

8. Verfahren nach Anspruch 6, wobei die Phasenverschiebungseinrichtung eine abgestimmte Schaltung ist.

9. Verfahren nach Anspruch 6, wobei die Phasenverschiebungseinrichtung eine RC-Schaltung ist.

10. Verfahren nach Anspruch 1, wobei das modulierte Signal derart erzeugt wird, dass sich Seitenbänder des modulierten Signals zwischen -40 dB und -60 dB unterhalb der Amplitude des Trägersignals befinden.

11. Verfahren nach Anspruch 1, weiterhin umfassend den Schritt des Empfangens des modulierten Signals mit einer zweiten Antenne, welche im Ansprechen darauf ein zweites Signal erzeugt, das das Datensignal anzeigt.

12. Verfahren nach Anspruch 11, wobei das erste Signal verwendet wird, um ein Empfängermittel zu speisen.

13. Vorrichtung, welche dazu ausgebildet ist, eine Radiofrequenzidentifizierungsvorrichtung abzufragen, umfassend:
eine erste Antenne;
ein Oszillatormittel zum Bereitstellen eines Trägersignals, welches dazu ausgebildet ist, die Radiofrequenzidentifizierungsvorrichtung zu speisen; und
ein Modulationsmittel zum Durchführen einer Phasenmodulation an dem Trägersignal nach Maßgabe eines Datensignals, um ein moduliertes Signal zu erzeugen;
**dadurch gekennzeichnet, dass** das Modulationsmittel eine Phasenmodulation an dem Trägersignal durchführt, welche durch eine geringe Phasenabweichung bewirkt wird, sodass das modulierte Signal als ein Phasenjitter in einem Anregungsfeld erscheint, welches von der ersten Antenne übertragen wird.

14. Vorrichtung nach Anspruch 13, wobei das modulierte Signal eine Quadratur-Komponente aufweist.

15. Vorrichtung nach Anspruch 14, wobei die Phasenabweichung durch die Gleichung bereitgestellt wird:
THETA = arctan(2xMag(PRK)/Mag(Fc)),
wobei Fc das Trägersignal und PRK die Quadratur-Komponente ist.

16. Vorrichtung nach Anspruch 14, wobei die Quadratur-Komponente von einem Abschnitt des Trägersignals abgeleitet wird, welcher 90 Grad phasenverschoben ist, um ein erstes Signal zu erzeugen.

17. Vorrichtung nach Anspruch 13, wobei das modulierte Signal eine Summe aus einem Trägersignal und einem gedämpften Quadraturträgersignal umfasst, welches mit dem Datensignal moduliert ist.

18. Vorrichtung nach Anspruch 13, wobei die Antenne eine abstimmbare Spule ist.

19. Vorrichtung nach Anspruch 13, wobei das Modulationsmittel eine Phasenverschiebungseinrichtung ist.

20. Vorrichtung nach Anspruch 19, wobei die Phasenverschiebungseinrichtung eine Verzögerungsleitung ist.

21. Vorrichtung nach Anspruch 19, wobei die Phasenverschiebungseinrichtung eine abgestimmte Schaltung ist.

22. Vorrichtung nach Anspruch 19, wobei die Phasenverschiebungseinrichtung eine RC-Schaltung ist.

23. Vorrichtung nach Anspruch 13, wobei das modulierte Signal derart erzeugt wird, dass sich Seitenbänder des modulierten Signals zwischen -40 dB und -60 dB unterhalb der Amplitude des Trägersignals befinden.

24. Radiofrequenzidentifizierungsvorrichtung (RFID = "Radio Frequency Identification Device"), welche zum Abfragen durch die Vorrichtung nach einem der Ansprüche 13 bis 23 ausgebildet ist, wobei die RFID umfasst:
eine zweite Antenne und
ein Empfängermittel, welches dazu ausgebildet ist, ein zweites Signal, welches ein Datensignal anzeigt, von einem ersten Signal abzuleiten, welches zweite Signal durch die zweite Antenne im Ansprechen auf ein Empfangen des modulierten Signals bereitgestellt wird, das als der Phasenjitter in dem Anregungsfeld erscheint.

25. RFID-Vorrichtung nach Anspruch 24, wobei das erste Signal verwendet wird, um das Empfängermittel zu speisen.

26. Identifizierungssystem, welches eine Vorrichtung nach einem der Ansprüche 13 bis 23 umfasst.

27. System nach Anspruch 26 zur Identifizierung von Gepäck.

## Revendications

1. Procédé pour transmettre des données pour une identification de fréquence radio à partir d'une première antenne, le procédé comprenant les étapes consistant à :
délivrer un signal de porteuse adapté pour alimenter un dispositif d'identification de fréquence radio ;
appliquer une modulation de phase au signal de porteuse en fonction d'un signal de données pour créer un signal modulé ; et
délivrer le signal modulé à la première antenne ;
**caractérisé en ce que** la modulation de phase sur le signal de porteuse est provoquée par un faible écart de phase de telle sorte que le signal modulé apparaisse comme une instabilité de phase dans un champ d'excitation émis par la première antenne.

2. Procédé selon la revendication 1, dans lequel le signal modulé comporte une composante en quadrature.

3. Procédé selon la revendication 2, dans lequel l'écart de phase est donné par l'équation :
THETA = arctan (2xMag(PRK)/mag(Fc)),
où Fc est le signal de porteuse et PRK est la composante en quadrature.

4. Procédé selon la revendication 2, dans lequel la composante en quadrature est dérivée d'une partie du signal de porteuse, qui est déphasée de 90 degrés afin de créer un premier signal.

5. Procédé selon la revendication 4, dans lequel le premier signal est modulé par la composante en quadrature avec le signal de données.

6. Procédé selon la revendication 1, dans lequel un déphaseur commandé par le signal de données est utilisé pour produire l'écart de phase.

7. Procédé selon la revendication 6, dans lequel le déphaseur est une ligne à retard.

8. Procédé selon la revendication 6, dans lequel le déphaseur est un circuit accordé.

9. Procédé selon la revendication 6, dans lequel le déphaseur est un circuit RC.

10. Procédé selon la revendication 1, dans lequel le signal modulé est créé de telle sorte que des bandes latérales du signal modulé soient comprises entre -40 dB et -60 dB en dessous de l'amplitude du signal de porteuse.

11. Procédé selon la revendication 1, comprenant de plus l'étape consistant à recevoir le signal modulé avec une deuxième antenne, qui, en réponse à celui-ci, produit un deuxième signal indicatif du signal de données.

12. Procédé selon la revendication 11, dans lequel le premier signal est utilisé pour alimenter des moyens formant récepteur.

13. Dispositif adapté pour interroger un dispositif d'identification de fréquence radio, comprenant :
une première antenne ;
des moyens formant oscillateur pour délivrer un signal de porteuse adapté pour alimenter le dispositif d'identification de fréquence radio ; et
des moyens de modulation pour appliquer une modulation de phase au signal de porteuse en fonction d'un signal de données afin de créer un signal modulé ;
**caractérisé en ce que** les moyens de modulation appliquent une modulation de phase sur le signal de porteuse provoquée par un faible écart de phase de telle sorte que le signal modulé apparaisse comme une instabilité de phase dans un champ d'excitation émis par la première antenne.

14. Dispositif selon la revendication 13, dans lequel le signal modulé comporte une composante en quadrature.

15. Dispositif selon la revendication 14, dans lequel l'écart de phase est donné par l'équation :
THETA = arctan (2xMag(PRK)/mag(Fc)),
où Fc est le signal de porteuse et PRK est la composante en quadrature.

16. Dispositif selon la revendication 14, dans lequel la composante en quadrature est dérivée d'une partie du signal de porteuse, qui est déphasée de 90 degrés pour créer un premier signal.

17. Dispositif selon la revendication 13, dans lequel le signal modulé comprend une somme du signal de porteuse et d'un signal de porteuse en quadrature atténué qui est modulé avec le signal de données.

18. Dispositif selon la revendication 13, dans lequel l'antenne est un enroulement pouvant être accordé.

19. Dispositif selon la revendication 13, dans lequel les moyens de modulation sont un déphaseur.

20. Dispositif selon la revendication 19, dans lequel le déphaseur est une ligne à retard.

21. Dispositif selon la revendication 19, dans lequel le déphaseur est un circuit accordé.

22. Dispositif selon la revendication 19, dans lequel le déphaseur est un circuit RC.

23. Dispositif selon la revendication 13, dans lequel le signal modulé est créé de telle sorte que des bandes latérales du signal modulé soient comprises entre -40 dB et -60 dB en dessous de l'amplitude du signal de porteuse.

24. Dispositif d'identification de fréquence radio (Radio Frequency Identification Device ou RFID) adapté pour l'interrogation par le dispositif selon l'une quelconque des revendications 13 à 23, le dispositif d'identification de fréquence radio comprenant :
une deuxième antenne, et
des moyens formant récepteur, adaptés pour dériver un deuxième signal indicatif d'un signal de données à partir d'un premier signal délivré par la deuxième antenne en réponse à la réception du signal modulé qui apparaît comme étant l'instabilité de phase dans le champ d'excitation.

25. Dispositif d'identification de fréquence radio selon la revendication 24, dans lequel le premier signal est utilisé pour alimenter les moyens formant récepteur.

26. Système d'identification comprenant un dispositif selon l'une quelconque des revendications 13 à 23.

27. Système selon la revendication 26 pour identifier un bagage.
